# EUROPEAN PATENT SPECIFICATION

(11) **EP 2 532 208 B1**
(45) Date of publication and mention of the grant of the patent: **13.05.2015**
(21) Application number: 11737235.9
(22) Date of filing: 31.01.2011
(51) Int. Cl.: H04W 76/02, H04W 84/10, H04W 84/04

(54) **WIRELESS COMMUNICATION ROUTING**
ROUTING DRAHTLOSER KOMMUNIKATIONEN
ACHEMINEMENT DE COMMUNICATIONS SANS FIL

(30) Priority: 01.02.2010 GB 201001623
(43) Date of publication of application: 12.12.2012
(73) Proprietor: NEC Corporation, Tokyo 108-8001 (JP)
(72) Inventor: REN, Weili, Reading Berkshire RG2 0TD (GB); VAN ORDEN, Jon, Reading Berkshire RG2 0TD (GB)
(74) Representative: Vossius & Partner Patentanwälte Rechtsanwälte mbB
(86) International application number: PCT/JP2011/052458
(87) International publication number: WO 2011/093531

(56) References cited:
- EP-A1- 2 104 398
- WO-A2-2009/068561
- JP-A- 10 191 445
- JP-A- 2009 159 283
- JP-A- 2009 253 684
- US-A1- 2002 009 991
- US-A1- 2009 092 080
- US-A1- 2009 093 232

## Description

### Technical Field

This invention relates to routing of communication in wireless third generation (3G), networks, and in particular to routing of communications via 3G Femtocells. This invention also relates to 3G Femtocell deployment in small to medium size enterprises (SMEs).

### Background Art

Mobile communication systems operate on a cellular basis in which transmission and receiver base stations coupled to a network provide transmission and reception to user equipment (UE) such as mobile telephones in each cell in a network. There is usually a single base station in each cell. The base stations are usually referred to as macro base stations and the cells as macrocells.

Smaller cell sites called picocells have been proposed. These cover a smaller area such as a complex of buildings. Still smaller cell sites called Femtocells are also proposed. This is a term used by mobile operators to refer to cell sites of the type which attempt to solve the often expensive problem of providing complete in-building coverage where macrocells are often unable to provide adequate coverage due to attenuation and scattering of the radio signal from the base station.

A Femtocell is often referred to as an access point base station. Femtocells are also known as Home NodeB or Home eNodeB cells. It is a small plug and play device which communicates with user equipment such as mobile handsets using second generation (2G) or third generation (3G) transmission reception using wireless cellular networks. It is connected to the cellular network via a broadband service using either Xdsl or WiMax™ technology. Xdsl is a family of technologies in which a digital subscriber loop allows broadband communications over conventional copper telephone lines, and WiMax™, is a wireless Technology defined by the IEEE (Institute of Electrical and Electronics Engineers) 802.16 standard providing improved wireless broadband compared to conventional Wi-Fi^{RTM} systems. WiMax™ is a pending trade Electrical and Electronics Engineers) 802.16 standard providing improved wireless broadband compared to conventional Wi-Fi^{RTM} systems. WiMax™ is a pending trade mark application of the WiMax Forum, California, USA and Wi-Fi^{RTM} is a registered trade mark of the Wi-Fi^{RTM} Alliance, California, USA.

A Femtocell can optionally incorporate the functionality of a broadband router so that a user has a completely integrated device. The Femtocell should integrate seamlessly with the core network of the mobile communication system so that it can be remotely managed and updated.

In Europe, one of the common 3G technologies, Universal Mobile Telecommunications System (UMTS), uses Wideband Code Division Multiple Access (W-CDMA) as the Radio Access Technology (RAT) to provide wireless communication. However, other RATs such as Code Division Multiple Access 2000 (CDMA 2000), Time Division Multiple Access (TD-CDMA), Universal Wireless Consortium (UWC), or Digital European Cordless Telecommunication (DECT) radio technologies may be used to implement 3-G networks.

In this way, Femtocells deployed in SMEs provide the traditional mobile services in the same way as in the Macro Layer networks from a user's perspective.

US 2009/0093232 A1 describes provisioning and access control for communication nodes involving assigning identifiers to sets of nodes where the identifiers may be used to control access to restricted access nodes that provide certain services only to certain defined sets of nodes.

WO 2009/068561 A2 discloses apparatus, method, and computer program whereby a cellular network base station operates with a closed subscriber group indicator indicating off.

US 2009/00920880 A1 describes providing for centralized access management to diverse types of mobile network access points.

EP 2 104 398 A1 is directed to a base station accommodation method and mobile communication system which allows the installation of many micro-miniature BTS devices.

### Summary of Invention

### Technical Problem

However, establishing a connection between a UE and a Femtocell currently occupies a substantial amount of the core network's resources, both in the control signalling plane and in the user data plane.

### Solution to Problem

According to a first aspect of the present invention, there is provided a method for routing communications in a communications network between a first User Equipment . (UE) registered with an access point base station and a second User Equipment as defined by independent claim 1, the method comprising the steps of determining whether the second user equipment is within network coverage of the access point base station or a further access point base station; and routing the communication via one or more of the access point base stations in dependence upon the result of the determination. One or more of the access point base stations may be positioned at least partially within range of one or more macro base stations.

According to a second aspect of the present invention, there is provided an access point base station for routing communications between a first User Equipment registered with the access point base station and a second User Equipment as defined by independent claim 3, the access point comprising means for determining whether the second user equipment is within network coverage of the access point base station or a further access point base station and means for routing the communication via one or more of the access point base stations wherein the communication is routed via one or more of the access point base stations in dependence upon the result of the determination. One or more of the access point base stations may be positioned at least partially within range of one or more macro base stations.

According to a further aspect of the present invention, there is provided a computer-readable medium which when executed on a computer executes the method according to the first aspect of the present invention.

### Advantageous Effects of Invention

Aspects of the invention enable a Femtocell to provide private branch exchange (BPX)-like internal circuit switched call services between UE's without using the core network's resources. By an internal call, we mean any communication between one UE and another UE, which may be a voice, video call or other communication such as a text message, when both parties i.e. UE's are within the Femtocell SME network coverage.

This has the advantage of making the core network's resources more readily available for other UE's when Femtocells are not available as an alternative to macrocells. Providing internal circuit switched call services also allows for services to be provided free or at lower rate of charge.

Aspects of the invention achieve this by modifying the Circuit Switched (CS) call establishment procedure. The modification does not impose any change on the mobile communications standards or to network components. All changes are reflected in the Femtocells or Closed Subscriber Group (CSG) cells instead. Aspects of the invention may comprise a local database that is manipulated by each CSG cell to track and update a UE status when it roves in, stays in and roves out the Femtocell coverage. A phone number to International Mobile Subscriber Identity (IMSI) or/and Temporary Mobile Station Identifier (TMSI) mapping table may also be provided whereby the CSG cell determines whether or not the ongoing call establishment is an internal CS call without the CS core network involvement.

Aspects of the invention remove or minimise the involvement of the operator's core network in the internal CS call establishment, without any modification to conventional mobile handsets and the core network components in order for the Femtocell SME network to be interoperable with the existing operator's core network and the subscribers' mobile handsets.

### Brief Description of Drawings

[Fig. 1]

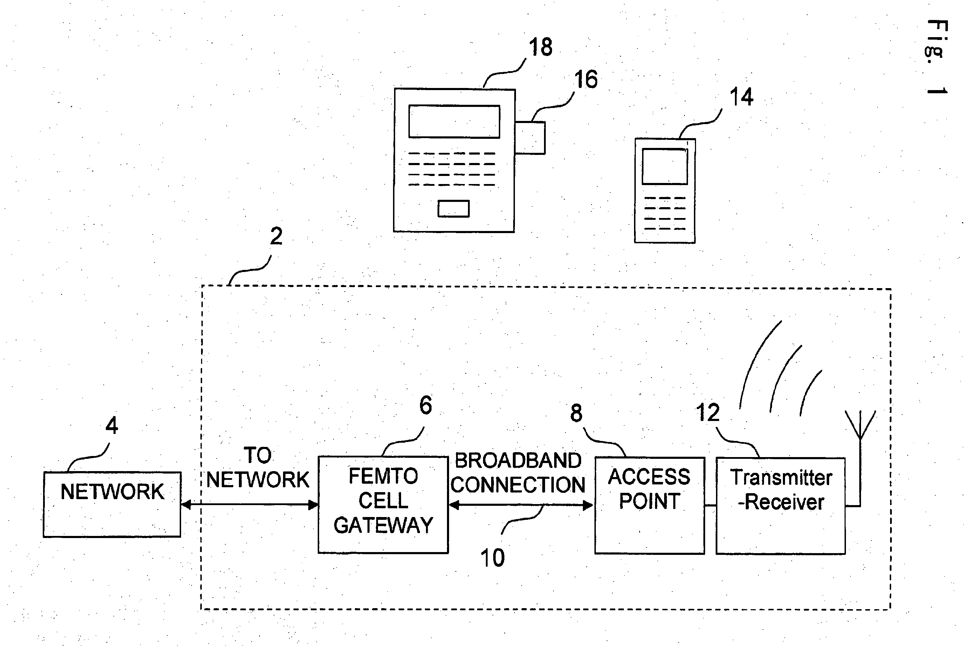

   Fig. 1 is a schematic diagram showing a Femtocell connected to a network and in communication with user equipment.
[Fig. 2]

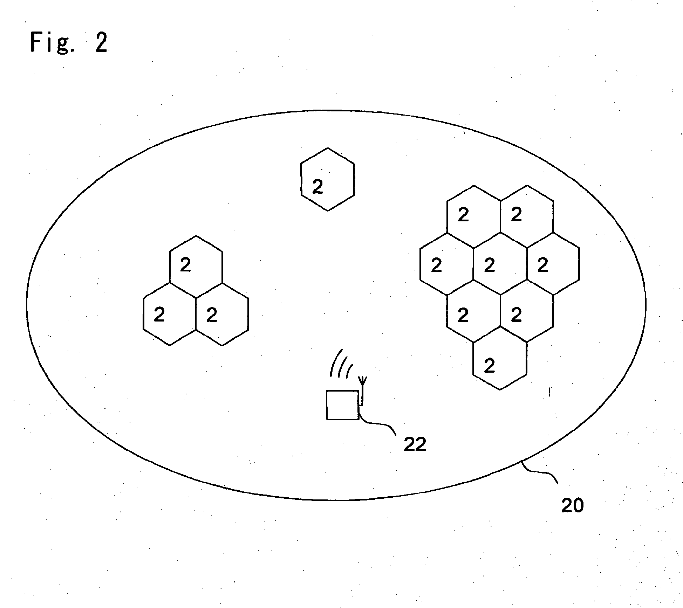

   Fig. 2 is a schematic diagram showing a macro cell with a base station and a number of Femtocells present within it.
[Fig. 3]

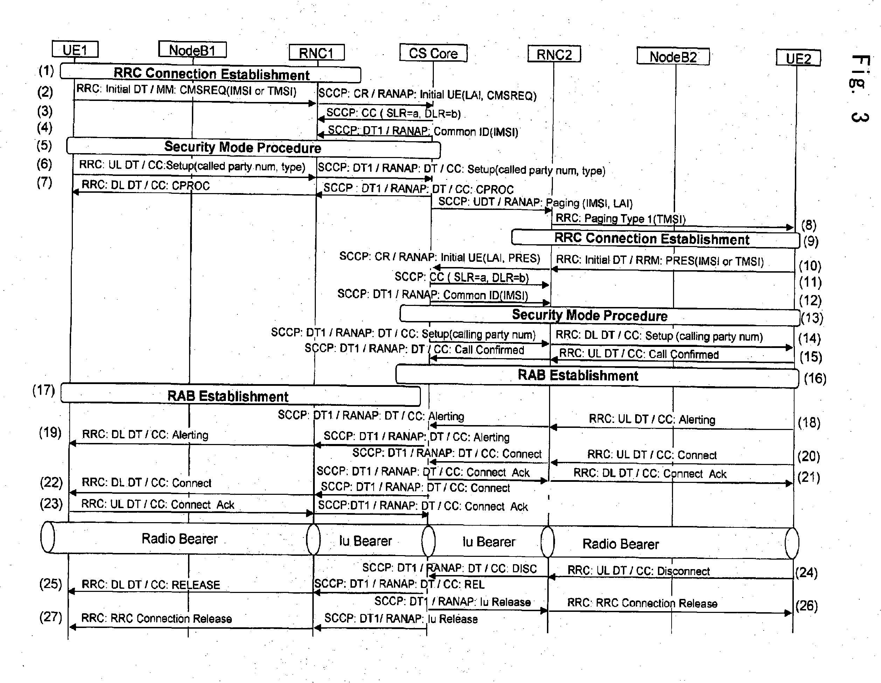

   Fig. 3 is a schematic diagram showing the overall signalling flow of CS call establishment.
[Fig. 4]

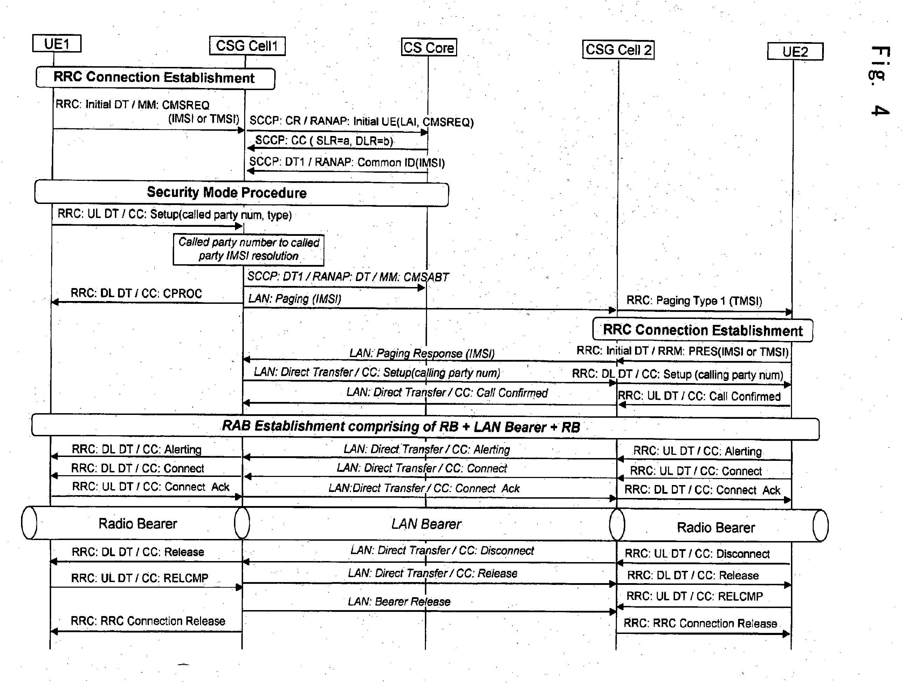

   Fig. 4 is a schematic diagram showing the overall signalling flow for internal CS call establishment.

### Description of Embodiments

Exemplary embodiments of the invention will now be described in detail, by way of example only, with reference to the accompanying drawings.

In Fig. 1 there is shown a Femtocell 2 which is coupled to a network at 4. This is usually a hard wired connection such as a local area network (LAN). The Femtocell comprises a Femtocell gateway 6 and an access point 8 coupled by a Broadband connection 10. The access point has coupled to it a transmitter-receiver or transceiver 12 which transmits and receives signals over a short distance to user equipment positioned within range. The user equipment may be for example, a mobile phone 14 or a data card 16 attached to a laptop 18. User equipment which comes within range of a Femtocell access point may communicate directly with that access point if it is authorised to do so, and does this in preference to communication with a macro cell within which it is positioned.

In Fig. 2, a schematic diagram of a macro cell 20 is shown. This has a base station 22 which transmits and receives signals from user equipment positioned within it. Further positioned within the macro cell are a plurality of Femtocells 2. These may comprise clusters of Femtocells 2 as may be required in a large office building or individual cells which may be used in private homes for example. In practice, in a city many thousands of Femtocells could be present within a single macro cell.

When a piece of user equipment such as a handset 14 or data card 16 establishes a connection with a 3G Macro cell, it goes through a circuit switched (CS) call establishment signalling procedure. The overall signalling procedure of CS call establishment is shown in Fig. 3. This is the case where two UEs, UE1 and UE2 are camped on cells, CSG Cell 1 and CSG Cell 2, belonging to different radio network controllers (RNCs).

After moving into Radio Resource Control (RRC) connected state via RRC Connection Establishment phase (1), the calling party UE1 sends an RRC Initial Direct Transfer message, which packs Mobility Management Connection Management (MM CM) Service Request, to the RNC1 (2). The RNC1 then forwards MM CM Service Request to the CS Core via Signalling Connection Control Part/Radio Access Network Application Part (SCCP/RANAP). RANAP Initial UE message triggers the SCCP to establish Iu-CS signalling connection to the circuit switched (CS) Core for transferring the RANAP messages. During the Iu-CS signalling connection establishment (Iu-CS is the interface between the mobile switching centre (MSC) and Radio Network Station (RNS)), the CS Core sends the RNC1 the UE1's IMSI as seen in message (4).

After the Security Mode procedure (5) that enables integrity protection and ciphering, the UE1-to-CS Core signalling connection has been established. It consists of an RRC connection (Signalling Radio Bearers or SRBs) and the Iu-CS signalling connection.

The UE1 then initiates Call Control (CC) Setup via RRC Uplink Direct Transfer and RANAP Direct Transfer. CC Setup specifies the called party UE2 phone number and number type (6). The CS Core responds by returning a Call Proceeding to acknowledge that it has now received all the information to establish the CS call connection (7).

The CS Core analyses the UE2 phone number and maps it by using the number type and numbering plan to the UE2's permanent identity, i.e. International Mobile Subscriber Identity (IMSI). The CS Core then sends RANAP Paging (8) to the RNC2 that covers the location area, within which the UE2 registered its location area (assuming a single RNC per Location Area network planning). The RANAP Paging addresses the UE2 using a mandatory IMSI and an optional TMSI. The RRC Paging Type 1 preferably specifies TMSI, for confidentiality, or IMSI to address the UE2.

After RRC Connection Establishment (9), the UE2 sends the Radio Resource Management (RRM) Paging Response to the CS Core (10). Likewise, the RANAP Initial UE message triggers the SCCP to establish Iu-CS signalling connection to the CS Core for transferring the RANAP messages (11). During the Iu-CS signalling connection establishment, the CS Core sends to the RNC2 the UE2's IMSI (12). Procedures (16) and (17) are used to establish user plane Radio Access Bearer (RAB). The CS call establishment is completed by the CC Alerting (18, 19), CC Connect (20) and CC Connect Acknowledge (21) messages.

The signalling procedure according to exemplary embodiments of the invention is shown in Fig. 4. The CSG cells referred to relate to the latest specification of 3G Femtocells as currently being developed. That is to say, a CSG cell may be a Femtocell.

When a UE originates CS call within the Femtocell SME coverage, to check whether or not the called party is a UE within the Femtocell SME coverage as well, the called party number must become available. However the calling party UE does not send the called party number until RRC: Uplink Direct Transfer / CC: Setup (called party number), thus the signalling flow according to exemplary embodiments of the invention does not change until after sending this message. By the time when this message is received by the CSG Cell 1, the CS Core has already set up Iu-CS signalling connection towards the UE1, and is waiting to further complete CS call connection to it.

The CSG Cell 1 by using the called party number resolution mechanism, described in further detail below, knows that this is an internal CS call attempt. To remove the use of the operator's network resources, the CGS Cell 1 does not pack CC: Setup in RANAP message and forward to the CS Core. Instead, it sends CM Service Abort to the CS Core to abort the CS call establishment that was triggered by MM: CM Service Request, meanwhile it broadcasts LAN: Paging (IMSI) to all CSG cells of the SME network via the Ethernet LAN that interconnects these CSG cells to form the SME network. It also sends RRC: Downlink Direct Transfer / CC: Call Proceeding to the UE1.

After reception of the paging type 1 message, the UE2 initiates RRC Connection Establishment, and then sends RRM: Paging Response. In the standard signalling procedure, CSG cell2 forwards this Paging Response to the CS Core, and trigger Iu-CS signalling connection establishment between the UE2 and the CS Core. In order to remove the involvement of the operator's network for the internal CS call services, the CSG Cell 2 changes the signalling flow and directly forwards the Paging Response to the CSG Cell 1. The CSG Cell 1 then responds by sending LAN: Direct Transfer / CC : Setup (calling party number) to the CSG Cell 2. Thus, from the UE's point of view, the signalling flow appears to be the same as standard CS call establishment.

The UE-to-UE traffic channel establishment (RAB establishment in 3GPP's term) comprises two Radio Bearer Setups and LAN Bearer Setup. The Radio Bearer (RB) setup is as previously described between the UEs and the CSG cells and controlled by two co-ordinated CSG cells. Exemplary embodiments of the invention comprise a new LAN Bearer setup functionality which is added onto the CSG cells.

After the RAB Establishment, CC: Alerting, CC: Connect and CC: Connect Ack are transferred sequentially between the UEs and CSG cells, and the two CSG cells forward these messages via LAN: Direct Transfer. The CS call tear-down procedure is similar, i.e. the two CSG cells forward the relevant messages via LAN: Direct Transfer.

The Iu-CS signalling connection is not maintained for the UE1 and is not established for UE2 during the internal CS call, the CS Core thinks that the two UEs are in MM-Idle state, and expects a Periodic Location Updating Request from them. However the two UEs are actually in Radio Resource Control (RRC) Cell-Dedicated Channel (DCH) state, in which state the Periodic Location Updating stops. Thus when Periodic Location Updating timer expires in the CS Core, the CS Core updates the two UEs' state to MM-Detached, and no paging for incoming PS call can reach them anymore until the call releases and the UEs re-register with the CS Core.

This allows free internal CS call services to be provided while remaining interoperable with conventional mobile handsets and core network components.

Exemplary embodiments of the invention do not allow CSG cell to Macro cell handover when one of the two UEs steps out the SME coverage. However, because the two parties of an internal CS call are usually stationary or moving in pedestrian speed within an office building, only CSG cell to CSG cell handovers may occur, and therefore it is not usually necessary to allow CSG cell to macro cell handover.

### [Tracking idle User Equipment within Femtocells]

When a UE in the SME coverage originates a CS call to another UE, the CSG cell that the calling UE camps on has to know whether or not the called UE is within the SME Femtocell coverage and in Idle state. To be able to do so, the CSG cells track a UE whenever it roves in, stays and roves out the SME coverage. Each of the CSG cells maintains a local database that records status of each in-coverage idle UE. The database may take the following form as an example.

**Table 1: An extract of a database stored on a Femtocell or CSG cell with which a calling UE is registered.**

| User Equipment (UE) | International Mobile Subscriber Identity (IMSI) | Temporary Mobile Station Identifier (TMSI) | Idle and in-coverage |
|---|---|---|---|
| 1 | 2627500000123 | 01 13 E9 27 | Yes |
| 2 | 2627500000131 | 05 32 A0 54 | Yes |
| 3 | 2627500000089 | 02 34 65 B3 | No |
| ... | ... | ... | ... |

To keep the database updated, the CSG cells perform the following tasks:
(a). When a UE roves in the SME coverage, it performs standard Location Updating with the core network via one of the CSG cells since the CSG cells broadcast an identical and unique Location Area Code (LAC) that is different from the surrounding Macro cells. The UE performs the Location Updating in the same way as via any Macro cell. To be able to receive the UE's IMSI, the CSG cell, via which the standard Location Updating is being performed, inserts Identity Request as well. The CSG cell records the IMSI or/and allocated TMSI of the UE and broadcasts them to all the CSG cells of the SME network via the Ethernet LAN that interconnects these CSG cells to form the SME network. The broadcast may be implemented at Internet Protocol (IP) layer or more efficiently at Medium Access Control (MAC) layer.
(b). When a UE roves out of the SME coverage, it performs standard Location Updating via the surrounding Macro cell that it thinks is the most appropriate by the cell reselection criteria. Thus none of the CSG cells receive a Periodic Location Updating Request from this UE, and the Periodic Location Updating timer expires in the CSG cell, via which the UE performed the Location Updating last time. The timeout triggers this CSG cell to remove the UE from its local database and broadcast the removal to all the CSG cells via the Ethernet LAN. A Periodic Location Updating via another CSG cell (cell reselection within the SME happened) activates the timer in that CGS cell meanwhile deactivate the timer in the CGS cell, via which the Location Updating was performed last time.
(c). The UE staying within the SME coverage performs the Periodic Location Updating to notify the core network that it is still in that location and in Idle state. The UE performs the Periodic Location Updating in the same way as via any Macro cell. The CSG cell, via which the Periodic Location Updating is being performed, broadcasts this event to all the CSG cells via the Ethernet LAN in order for them to update their local database. This CSG cell then resets its Periodic Location Updating timer.

Operations (a), (b) and (c) ensure integrity of the database across the CSG cells in the SME network, and enable direct paging from the calling CSG cell without the core network involvement.

### [Mobile Subscriber Integrated Services Digital Network Number (MSISDN) - International Mobile Subscriber Identity (IMSI) - Temporary Mobile Station Identifier (TMSI) mapping table]

In order for the calling CSG cell to convert the called party phone number to the called party IMSI, and further be able to look-up the local database to check if the called UE is within the SME coverage and in Idle state, each internal call enabled (Universal Subscriber Identity Module) USIM identity (IMSI) and associated telephone number (Mobile Subscriber Integrated Services Digital Network (ISDN) or MSISDN) are one-to-one mapped in a table that can be configured and managed by the SME network administrator. The table may take the following form as an example.

**Table 2: An extract of a second database stored on a Femtocell or CSG cell with which a calling UE is registered.**

| USIM | IMSI | MSISDN |
|---|---|---|
| 1 | 2627500000123 | 495500123 |
| 2 | 2627500000131 | 495500131 |
| 3 | 2627500000089 | 495500089 |
| 4 | 2627500000166 | 495500166 |
| 5 | 2627500000130 | 495500130 |
| ... | ... | ... |

Each CSG cell of the SME network has a copy of the table. Addition, deletion or modification of any item in the mapping table will trigger the update of all the copes in the CSG cells.

When a UE originates a CS call within the SME coverage, the CSG cell serving the UE looks up the mapping table to find out the corresponding IMSI of the called UE, then looks up the local database to check whether the called UE is within the SME coverage and in Idle state or not. If the database does not contain the called UE's record, that means it is not an internal CS call and the standard signalling procedure will be followed, otherwise the proposed signalling procedure will be followed to obtain a free internal CS call services.

### [Functionality on CSG cells]

The Femtocell access technology does not follow the UMTS Macro network architecture. Instead it is tailored to better use of Internet backhauling (transmitting data to a network backbone or main internet network). The CSG cells contain all Node B functionalities, most RNC functionalities and some core network functionalities. To provide the free internal CS call services, exemplary embodiments of the invention may include the following functionality in CSG cells:
(1) Subset of the CS core's Call Control protocol. To minimise the CS core functionality that the CSG cells have to be added for the internal CS call establishment, the CSG calls can always select the default UMTS speech codec in Speech Codec Selection.
(2) LAN transparent transfer protocol for transferring CC signalling between the CSG cells. It is functionally similar to RANAP over Iu-CS. It can be designed to be a TCP based upper layer protocol.
(3) User plane protocol for voice / video traffic transferring over Ethernet between the CSG cells. It can be tailored from an existing Internet Engineering Task Force protocol.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

It will be appreciated that embodiments of the invention may be implemented both in computer software (program) as well as directly in chips and the like directly integrated into an access point or femtocell. The software (program) may be provided on a carrier medium such as a CD ROM (Compact Disc Read-Only Memory) or may be transmitted over a network. The program is the one for causing a CPU (Central Processing Unit) or the like to execute the signaling procedure shown in Fig. 4.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM, CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

This application is based upon and claims the benefit of priority from United Kingdom patent application No. 1001623.6, filed on February 1, 2010.

### Reference Signs List

- 2: FEMTOCELL
- 4: NETWORK
- 6: FEMTOCELL GATEWAY
- 8: ACCESS POINT
- 10: BROADBAND CONNECTION
- 12: TRANSMITTER-RECEIVER (TRANSCEIVER)
- 14: MOBILE PHONE (HANDSET)
- 16: DATA CARD
- 18: LAPTOP
- 20: MACRO CELL
- 22: BASE STATION

## Claims

1. A method for routing communications in a communications network between a first User Equipment (UE) registered with an access point base station (2) and a second User Equipment, the access point base station (2) positioned at least partially within range of one or more macro base stations (22), the method comprising the steps of:
determining whether the second user equipment is within network coverage of the access point base station (2) or a further access point base station positioned at least partially within range of one or more macro base stations (22); **characterized by**
routing the communication via one or more of the access point base stations (2) in dependence upon the result of the determination; and
broadcasting, by each access point base station, to all other access point base stations data updating a look-up table for an identifier indicating whether the second UE is within coverage of the access point base station or further acces point base station.

2. The method according to claim 1 in which the step of determining whether the second user equipment is within coverage of the access point base station (2) or further base station comprises searching using a UE identifier, in particular an International Mobile Subscriber Identity (IMSI), a look-up table for an identifier indicating whether the second UE is within coverage of the access point base station (2) or further access point base station.

3. An access point base station (2) for routing communications between a first User Equipment registered with the access point base station (2) and a second User Equipment, the access point base station (2) positioned at least partially within range of one or more macro base stations (22), the access point comprising:
means for determining whether the second user equipment is within network coverage of the access point base station (2) or a further access point base station positioned at least partially within range of one or more macro base stations (22); **characterized by**
means for routing the communication via one or more of the access point base stations (2); and
means for broadcasting to all other access point base stations data updating a look-up table for an identifier indicating whether the second UE is within coverage of the access point base station or further access point base station;
wherein the communication is routed via one or more of the access point base stations (2) in dependence upon the result of the determination.

4. The access point base station (2) according to claim 3 further comprising storage means for storing a look up-table.

5. The access point base station (2) according to claim 4 further comprising searching means for searching the look-up table.

6. The access point base station (2) according to claim 5 in which the searching means is arranged to search using a UE identifier, in particular an International Mobile Subscriber Identity (IMSI), the look-up table for an identifier indicating whether the second UE is within coverage of the access point base station (2) or further access point base station.

7. The access point base station (2) according to any one of claims 4 to 6 in which the look-up table comprises one or more UE identifiers, each identifier associated with an identifier indicating whether the UE is within coverage of the access point base station (2) or further base station.

8. The access point base station (2) according to any one of claims 3 to 7 further comprising further storage means for storing a second look up-table.

9. The access point base station (2) according to claim 8 further comprising further searching means for searching the second look-up table.

10. The access point base station (2) according to claim 9 in which the searching means is arranged to search the second look-up table for an International Mobile Subscriber Identity of the second UE, using a telephone number of the second UE.

11. The access point base station (2) according to claim 10 in which the second look-up table comprises one or more International Mobile Subscriber Identities of one or more UEs, each identity associated with a telephone number of a UE.

12. The access point base station (2) according to any one of claims 3 to 11 further comprising broadcasting means for broadcasting to all other access point base stations data updating the first look-up table.

13. The access point base station (2) according to claim 12 in which the updated data comprises one or more of data indicative of when a data indicative of when a UE moves into the coverage of an access point base station, data indicative of when a UE moves out of coverage of an access point base station, and data indicative that a UE remains within coverage of an access point base station.

14. The access point base station (2) according to any one of claims 3 to 13 further comprising a local area network, in particular an Ethernet local are network for routing the communications.

## Patentansprüche

1. Verfahren zum Routen von Kommunikationen in einem Kommunikationsnetzwerk zwischen einem ersten Endgerät (UE), das an einer Zugangspunkt-Basisstation (2) registriert ist, und einem zweiten Endgerät, wobei die Zugangspunkt-Basisstation (2) mindestens teilweise innerhalb eines Bereichs einer oder mehrerer Makro-Basisstationen (22) angeordnet ist, wobei das Verfahren die Schritte aufweist:
Bestimmen, ob das zweite Endgerät sich innerhalb der Netzwerkabdeckung der Zugangspunkt-Basisstation (2) oder einer weiteren Zugangspunkt-Basisstation befindet, die mindestens teilweise innerhalb des Bereichs einer oder mehrerer Makro-Basisstationen (22) angeordnet ist;
**gekennzeichnet durch**
Routen der Kommunikation über eine oder mehrere der Zugangspunkt-Basisstationen (2) in Abhängigkeit vom Bestimmungsergebnis; und
Rundsenden von Daten, die eine Nachschlagetabelle für eine Identifizierung aktualisieren, die anzeigt, ob das zweite Endgerät (UE) sich innerhalb des Abdeckungsbereichs der Zugangspunkt-Basisstation oder einer weiteren Zugangspunkt-Basisstation befindet, **durch** jede Zugangspunkt-Basisstation an alle anderen Zugangspunkt-Basisstationen.

2. Verfahren nach Anspruch 1, wobei der Schritt zum Bestimmen, ob das zweite Endgerät sich innerhalb des Abdeckungsbereichs der Zugangspunkt-Basisstation (2) oder der weiteren Zugangspunkt-Basisstation befindet, das Durchsuchen einer Nachschlagetabelle nach einer Identifizierung, die anzeigt, ob das zweite Endgerät (UE) sich innerhalb des Abdeckungsbereichs der Zugangspunkt-Basisstation (2) oder einer weiteren Zugangspunkt-Basisstation befindet, unter Verwendung einer UE-Identifizierung, insbesondere einer Internationalen Mobilfunk-Teilnehmerkennung (IMSI) aufweist.

3. Zugangspunkt-Basisstation (2) zum Routen von Kommunikationen zwischen einem ersten Endgerät, das an einer Zugangspunkt-Basisstation (2) registriert ist, und einem zweiten Endgerät, wobei die Zugangspunkt-Basisstation (2) mindestens teilweise innerhalb eines Bereichs einer oder mehrerer Makro-Basisstationen (22) angeordnet ist, wobei die Zugangspunkt-Basisstation aufweist:
eine Einrichtung zum Bestimmen, ob das zweite Endgerät sich innerhalb der Netzwerkabdeckung der Zugangspunkt-Basisstation (2) oder einer weiteren Zugangspunkt-Basisstation befindet, die mindestens teilweise innerhalb des Bereichs einer oder mehrerer Makro-Basisstationen (22) angeordnet ist; **gekennzeichnet durch**
eine Einrichtung zum Routen der Kommunikation über eine oder mehrere der Zugangspunkt-Basisstationen (2); und
eine Einrichtung zum Rundsenden von Daten, die eine Nachschlagetabelle für eine Identifizierung aktualisieren, die anzeigt, ob das zweite Endgerät (UE) sich innerhalb des Abdeckungsbereichs der Zugangspunkt-Basisstation oder einer anderen Zugangspunkt-Basisstation befindet, an alle anderen Zugangspunkt-Basisstationen,
wobei die Kommunikation in Abhängigkeit vom Bestimmungsergebnis über eine oder mehrere der Zugangspunkt-Basisstationen (2) geroutet wird.

4. Zugangspunkt-Basisstation (2) nach Anspruch 3, ferner mit einer Speichereinrichtung zum Speichern einer Nachschlagetabelle.

5. Zugangspunkt-Basisstation (2) nach Anspruch 4, ferner mit einer Sucheinrichtung zum Durchsuchen der Nachschlagetabelle.

6. Zugangspunkt-Basisstation (2) nach Anspruch 5, wobei die Sucheinrichtung dafür eingerichtet ist, die Nachschlagetabelle unter Verwendung einer UE-Identifizierung, insbesondere einer Internationalen Mobilfunk-Teilnehmerkennung (IMSI), nach einer Identifizierung zu durchsuchen, die anzeigt, ob das zweite Endgerät sich innerhalb des Abdeckungsbereichs der Zugangspunkt-Basisstation (2) oder einer weiteren Zugangspunkt-Basisstation befindet.

7. Zugangspunkt-Basisstation (2) nach einem der Ansprüche 4 bis 6, wobei die Nachschlagetabelle eine oder mehrere UE-Identifizierungen aufweist, wobei jeder Identifizierung eine Identifizierung zugeordnet ist, die anzeigt, ob das Endgerät sich innerhalb des Abdeckungsbereichs der Zugangspunkt-Basisstation (2) oder einer weiteren Zugangspunkt-Basisstation befindet.

8. Zugangspunkt-Basisstation (2) nach einem der Ansprüche 3 bis 7, ferner mit einer weiteren Speichereinrichtung zum Speichern einer zweiten Nachschlagetabelle.

9. Zugangspunkt-Basisstation (2) nach Anspruch 8, ferner mit einer weiteren Sucheinrichtung zum Durchsuchen der zweiten Nachschlagetabelle.

10. Zugangspunkt-Basisstation (2) nach Anspruch 9, wobei die Sucheinrichtung dafür eingerichtet ist, die zweite Nachschlagetabelle nach einer Internationalen Mobilfunk-Teilnehmerkennung des zweiten Endgeräts unter Verwendung einer Telefonnummer des zweiten Endgeräts zu durchsuchen.

11. Zugangspunkt-Basisstation (2) nach Anspruch 10, wobei die zweite Nachschlagetabelle eine oder mehrere Internationale Mobilfunk-Teilnehmerkennungen eines oder mehrerer Endgeräte aufweist, wobei jede Kennung einer Telefonnummer eines Endgeräts zugeordnet ist.

12. Zugangspunkt-Basisstation (2) nach einem der Ansprüche 3 bis 11, ferner mit einer Rundsendeeinrichtung zum Rundsenden von Daten zum Aktualisieren der ersten Nachschlagetabelle an alle anderen Zugangspunkt-Basisstationen.

13. Zugangspunkt-Basisstation (2) nach Anspruch 12, wobei die aktualisierten Daten eines oder mehrere der folgenden Datenelemente aufweisen: Daten, die anzeigen, wenn ein Endgerät sich in den Abdeckungsbereich einer Zugangspunkt-Basisstation hinein bewegt, Daten, die anzeigen, wenn ein Endgerät sich aus dem Abdeckungsbereich einer Zugangspunkt-Basisstation heraus bewegt, und Daten, die anzeigen, dass ein Endgerät innerhalb des Abdeckungsbereichs einer Zugangspunkt-Basisstation verbleibt.

14. Zugangspunkt-Basisstation (2) nach einem der Ansprüche 3 bis 13, ferner mit einem lokalen Netzwerk, insbesondere einem lokalen Ethernet-Netzwerk, zum Routen der Kommunikationen.

## Revendications

1. Procédé d'acheminement de communications dans un réseau de communications entre un premier équipement utilisateur (EU) enregistré auprès d'une station de base de point d'accès (2) et un second équipement utilisateur, la station de base de point d'accès (2) étant positionnée au moins partiellement dans la portée d'une ou plusieurs macrostations de base (22), le procédé comprenant les étapes de :
détermination si le second équipement utilisateur est dans la couverture réseau de la station de base de point d'accès (2) ou d'une station de base de point d'accès supplémentaire positionnée au moins partiellement dans la portée d'une ou plusieurs macrostations de base (22) ; **caractérisé par**
l'acheminement de la communication via une ou plusieurs des stations de base de point d'accès (2) en fonction du résultat de la détermination ; et
la radiodiffusion, par chaque station de base de point d'accès, à toutes les autres stations de base de point d'accès de données mettant à jour une table de consultation pour un identifiant indiquant si le second EU est dans la couverture de la station de base de point d'accès ou de la station de base de point d'accès supplémentaire.

2. Procédé selon la revendication 1, dans lequel l'étape de détermination si le second équipement utilisateur est dans la couverture de la station de base de point d'accès (2) ou de la station de base de point d'accès supplémentaire comprend la recherche en utilisant un identifiant d'EU, en particulier une identité internationale d'abonné mobile (IMSI), une table de consultation pour un identifiant indiquant si le second EU est dans la couverture de la station de base de point d'accès (2) ou de la station de base de point d'accès supplémentaire.

3. Station de base de point d'accès (2) destinée à acheminer des communications entre un premier équipement utilisateur enregistré auprès de la station de base de point d'accès (2) et un second équipement utilisateur, la station de base de point d'accès (2) étant positionnée au moins partiellement dans la portée d'une ou plusieurs macrostations de base (22), le point d'accès comprenant :
un moyen permettant de déterminer si le second équipement utilisateur est dans la couverture réseau de la station de base de point d'accès (2) ou d'une station de base de point d'accès supplémentaire positionnée au moins partiellement dans la portée d'une ou plusieurs macrostations de base (22), **caractérisée par**
un moyen permettant d'acheminer la communication via une ou plusieurs des stations de base de point d'accès (2) ; et
un moyen permettant de radiodiffuser à toutes les autres stations de base de point d'accès des données mettant à jour une table de consultation pour un identifiant indiquant si le second EU est dans la couverture de la station de base de point d'accès ou de la station de base de point d'accès supplémentaire ;
dans laquelle la communication est acheminée via une ou plusieurs des stations de base de point d'accès (2) en fonction du résultat de la détermination.

4. Station de base de point d'accès (2) selon la revendication 3, comprenant en outre un moyen de stockage destiné à stocker une table de consultation.

5. Station de base de point d'accès (2) selon la revendication 4, comprenant en outre un moyen de recherche destiné à faire des recherches dans la table de consultation.

6. Station de base de point d'accès (2) selon la revendication 5, dans laquelle le moyen de recherche est agencé pour faire des recherches en utilisant un identifiant d'EU, en particulier une identité internationale d'abonné mobile (IMSI), la table de consultation pour un identifiant indiquant si le second EU est dans la couverture de la station de base de point d'accès (2) ou de la station de base de point d'accès supplémentaire.

7. Station de base de point d'accès (2) selon l'une quelconque des revendications 4 à 6, dans laquelle la table de consultation comprend un ou plusieurs identifiants d'EU, chaque identifiant étant associé avec un identifiant indiquant si l'EU est dans la couverture de la station de base de point d'accès (2) ou de la station de base supplémentaire.

8. Station de base de point d'accès (2) selon l'une quelconque des revendications 3 à 7, comprenant en outre un moyen de stockage supplémentaire destiné à stocker une seconde table de consultation.

9. Station de base de point d'accès (2) selon la revendication 8, comprenant en outre un moyen de recherche supplémentaire destiné à faire des recherches dans la seconde table de consultation.

10. Station de base de point d'accès (2) selon la revendication 9, dans laquelle le moyen de recherche est agencé pour rechercher dans la seconde table de consultation une identité internationale d'abonné mobile du second EU, en utilisant un numéro de téléphone du second EU.

11. Station de base de point d'accès (2) selon la revendication 10, dans laquelle la seconde table de consultation comprend une ou plusieurs identités internationales d'abonné mobile d'un ou plusieurs EU, chaque identité étant associée avec un numéro de téléphone d'un EU.

12. Station de base de point d'accès (2) selon l'une quelconque des revendications 3 à 11, comprenant en outre un moyen de radiodiffusion destiné à radiodiffuser à toutes les autres stations de base de point d'accès des données mettant à jour la première table de consultation.

13. Station de base de point d'accès (2) selon la revendication 12, dans laquelle les données mises à jour comprennent un ou plusieurs parmi des données indiquant quand un EU entre dans la couverture d'une station de base de point d'accès, des données indiquant quand un EU sort de la couverture d'une station de base de point d'accès et des données indiquant qu'un EU reste dans la couverture d'une station de base de point d'accès.

14. Station de base de point d'accès (2) selon l'une quelconque des revendications 3 à 13, comprenant en outre un réseau local, en particulier un réseau local Ethernet pour acheminer les communications.
